(19) Europäisches Patentamt
European Patent Office
Office européen des brevets

(11) Veröffentlichungsnummer: **0 076 411**
**A1**

# (12) EUROPÄISCHE PATENTANMELDUNG

(21) Anmeldenummer: 82108617.0

(22) Anmeldetag: 18.09.82

(51) Int. Cl.³: C 07 C 121/75
C 07 C 120/00
//A01N53/00

(30) Priorität: 02.10.81 DE 3139314

(43) Veröffentlichungstag der Anmeldung: 13.04.83 Patentblatt 83/15

(84) Benannte Vertragsstaaten: AT BE CH DE FR GB IT LI NL

(71) Anmelder: BAYER AG
Zentralbereich Patente, Marken und Lizenzen
D-5090 Leverkusen 1, Bayerwerk(DE)

(72) Erfinder: Cölln, Reimer, Dr.
In den Birken 67
D-5600 Wuppertal 1(DE)

(72) Erfinder: Gallenkamp, Bernd, Dr.
Claudiusweg 5
D-5600 Wuppertal 1(DE)

(72) Erfinder: Diehr, Hans-Joachim, Dr.
Höhe 35
D-5600 Wuppertal 1(DE)

## (54) Verfahren zur Herstellung von 3-Alkenyl-2,2-dimethyl-cyclopropancarbonsäure-(alpha-cyano-3-phenoxy-benzyl)-estern.

(57) Die Erfindung betrifft ein neues Verfahren zur Herstellung von bekannten 3-Alkenyl-2,2-dimethyl-cyclopropancarbonsäure-(α-cyano-3-phenoxy-benzyl)-estern der Formel I

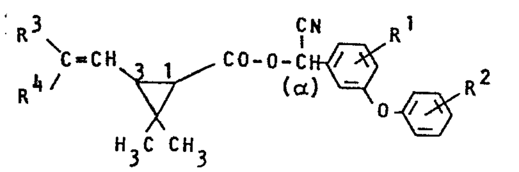

(I)

in welcher

- $R^1$ und $R^2$ unabhängig voneinander für Wasserstoff oder Halogen stehen,
- $R^3$ für Wasserstoff, Halogen oder gegebenenfalls substituiertes Alkyl steht und
- $R^4$ für Halogen, gegebenenfalls substituiertes Alkyl oder Alkenyl oder für gegebenenfalls substituiertes Phenyl steht oder zusammen mit $R^3$ für Alkandiyl (Alkylen) steht,

durch die Umsetzung von 3-Alkenyl-2,2-dimethyl-cyclopropancarbonsäurechloriden der Formel II

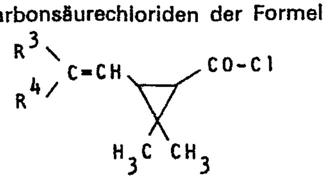

(II)

in welcher

$R^3$ und $R^4$ die oben angegebene Bedeutung haben, mit 3-Phenoxy-benzaldehyden der Formel III

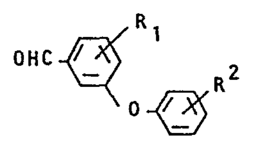

(III)

in welcher

$R^1$ und $R^2$ die oben angegebene Bedeutung haben,
- oder deren Addukten mit Alkalibisulfiten (-hydrogensulfiten oder -pyrosulfiten)-
und Alkalimetallcyaniden unter Verwendung von Alkylestern niederer Carbonsäuren und Wasser als Verdünnungsmittel gegebenenfalls unter Zusatz von Alkalibisulfiten bei Temperaturen zwischen −5 und +25°C.

EP 0 076 411 A1

0076411

BAYER AKTIENGESELLSCHAFT 5090 Leverkusen
Zentralbereich Rt/Fr
Patente, Marken und Lizenzen IV a

Verfahren zur Herstellung von 3-Alkenyl-2,2-dimethyl-cyclopropancarbonsäure-(α-cyano-3-phenoxy-benzyl)-estern

Die Erfindung betrifft ein neues Verfahren zur Herstellung von bekannten 3-Alkenyl-2,2-dimethyl-cyclopropancarbonsäure-(α-cyano-3-phenoxy-benzyl)-estern, welche als Schädlingsbekämpfungsmittel verwendet werden können.

Es ist bekannt, daß man (Cyclo-)-alkancarbonsäure-(α-cyano-3-phenoxy-4-fluor-benzyl)-ester, wie z.B. 3-(2,2-Dichlor-vinyl)- oder 3-(2-Chlor-2-(4-chlor-phenyl)-vinyl)-2,2-dimethyl-cyclopropan-1-carbonsäure-(α-cyano-3-phenoxy-4-fluor-benzyl)-ester oder α-Isopropyl-α-(4-chlor-phenyl)-essigsäure-(α-cyano-3-phenoxy-4-fluor-benzyl)-ester, erhält, wenn man die entsprechenden Säurechloride, wie z.B. 3-(2,2-Dichlor-vinyl)- oder 3-(2-Chlor-2-(4-chlor-phenyl))-vinyl-2,2-dimethyl-cyclopropan-1-carbonsäurechlorid oder α-Isopropyl-α-(4-chlor-phenyl)-essigsäurechlorid mit α-Cyano-3-phenoxy-4-fluor-benzylalkohol umsetzt (vergleiche DE-OS' 2 709 264 und 2 730 515).

Ausbeute und Qualität der Produkte sind bei diesem Herstellungsverfahren jedoch unbefriedigend. Die Ursache hierfür dürfte hauptsächlich darin bestehen, daß der als Ausgangsverbindung eingesetzte α-Cyano-3-phenoxy-4-fluor-benzylalkohol sehr leicht in die Ausgangskomponenten 3-Phenoxy-4-fluor-benzaldehyd und Cyanwasserstoff, zerfällt und praktisch nicht in reiner Form hergestellt werden kann.

Weiter ist bekannt, daß man substituierte Cyclopropancarbonsäure-α-cyano-benzylester erhält, wenn man substituierte Cyclopropancarbonsäurehalogenide mit substituierten Benzaldehyden in Gegenwart wässriger Lösungen von Natrium- oder Kalium-cyanid umsetzt (vergleiche DE-OS 2 231 312/US PS 3 835 176). Nach diesem Verfahren erhält man jedoch α-Cyano-benzylester ebenfalls nur in mäßigen Ausbeuten.

Ferner ist bekannt, daß bei der Umsetzung von Säurechloriden mit substituierten Benzaldehyden und Alkalicyaniden die Ausbeuten an α-Cyano-benzylestern verbessert und die Reaktionszeiten stark verkürzt werden können, wenn die Umsetzungen in mehrphasigen Systemen aus wenig Wasser, gegebenenfalls festem Alkalicyanid und aprotischen Lösungsmitteln, gegebenenfalls unter Verwendung von Phasentransferkatalysatoren durchgeführt werden (vergleiche DE-OS 2 7o8 59o/US-PS' 4 11o 36o, 4 11o 363 und 4 123 451).

Ferner ist aus DE-OS 2 7o859o bekannt, daß α-Phenyl-alkancarbonsäureester durch Umsetzung der entsprechenden Säurechloride, Alkalicyanid und Benzaldehyde im zweiphasigen Lösungsmittelsystem erhalten werden können, wenn spezielle Reaktionsbedingungen wie ein bestimmtes Verhältnis der Menge Wasser zu Cyanid angewendet werden. Die als Pestizide besonders interessanten Alkenylcyclopropancarbonsäure-α-cyanophenoxybenzylester können gemäß DE - OS 2 7o8 59o auf diese Weise nur bei Verwendung von Phasentransferkatalysatoren bei kurzer Reaktionszeit in hohen Ausbeuten hergestellt werden.

Schließlich ist bekannt, daß man bestimmte (Cyclo)-Alkancarbonsäure-(α-cyano-3-phenoxy-benzyl)-ester auch ohne Verwendung von Phasentransferkatalysatoren bei kurzer Reaktionszeit in hohen Ausbeuten erhält, wenn man zu Mischungen aus entsprechenden (Cyclo)-Alkancarbonsäurechloriden und Phenoxybenzaldehyden in Kohlenwasserstoffen unter starkem Rühren wässrige Lösungen oder Suspensionen von wasserlöslichen Cyaniden gibt (vergleiche DE-OS 2 933 496/Le A 19 848).

Es wurde nun gefunden, daß man 3-Alkenyl-2,2-dimethyl-cyclopropancarbonsäure-(α-cyano-3-phenoxy-benzyl)-ester der Formel I

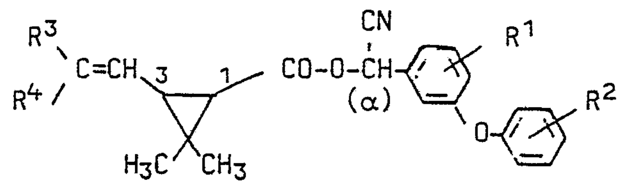

(I)

in welcher

$R^1$ und $R^2$ unabhängig voneinander für Wasserstoff oder Halogen stehen,

$R^3$ für Wasserstoff, Halogen oder gegebenenfalls substituiertes Alkyl steht und

$R^4$ für Halogen, gegebenenfalls substituiertes Alkyl oder Alkenyl oder für gegebenenfalls substituiertes Phenyl steht oder zusammen mit $R^3$ für Alkandiyl (Alkylen) steht,

erhält, wenn man 3-Alkenyl-2,2-dimethyl-cyclopropancarbonsäure-chloride der Formel II

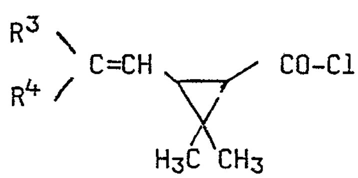

(II)

in welcher

$R^3$ und $R^4$ die oben angegebene Bedeutung haben,

mit 3-Phenoxy-benzaldehyden der Formel III

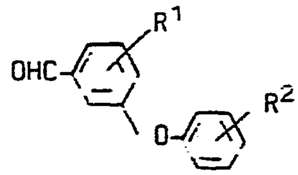

(III)

in welcher

$R^1$ und $R^2$ die oben angegebene Bedeutung haben,

- oder deren Addukten mit Alkalibisulfiten (-hydrogensulfiten oder -pyrosulfiten)-

und Alkalimetallcyaniden unter Verwendung von Alkylestern niederer Carbonsäuren und Wasser als Verdünnungsmittel gegebenenfalls unter Zusatz von Alkalibisulfiten bei Temperaturen zwischen -5 und +25°C umsetzt.

Es ist als überraschend anzusehen, daß die Verwendung von Carbonsäureestern als Verdünnungsmittel die Herstellung von Cyanhydrinestern der Formel (I) in nahezu quantitativer Ausbeute und hoher Reinheit ermöglicht, da aufgrund des bisher bekannten Standes der Technik anzunehmen war, daß unpolare , mit Wasser praktisch nicht mischbare Solventien aus der Reihe der Kohlenwasserstoffe die optimalen Verdünnungsmittel seien.

Bei Verwendung von Carbonsäureestern als Verdünnungsmitteln wird im Vergleich mit anderen Lösungsmitteln die höchste Reaktionsgeschwindigkeit erreicht.

Ein besonderer Vorteil des erfindungsgemäßen Verfahrens besteht jedoch darin, daß die Bildung der verschiedenen Stereoisomeren

von Verbindungen der Formel (I) so gesteuert werden kann, daß der Anteil der Isomeren höherer insektizider Wirkung im Vergleich mit bekannten Verfahren - allein durch die Wahl des Lösungsmittels oder auch durch Zusätze wie Alkalibisulfite - erheblich vergrößert werden kann.

Verwendet man als Ausgangsstoffe beispielsweise 3-(2,2-Dichlorvinyl)-2,2-dimethyl-cyclopropancarbonsäurechlorid und 3-Phenoxybenzaldehyd in Essigsäuremethylester sowie eine wässrige Lösung von Natriumcyanid, so kann die beim erfindungsgemäßen Verfahren ablaufende Reaktion durch folgendes Formelschema skizziert werden:

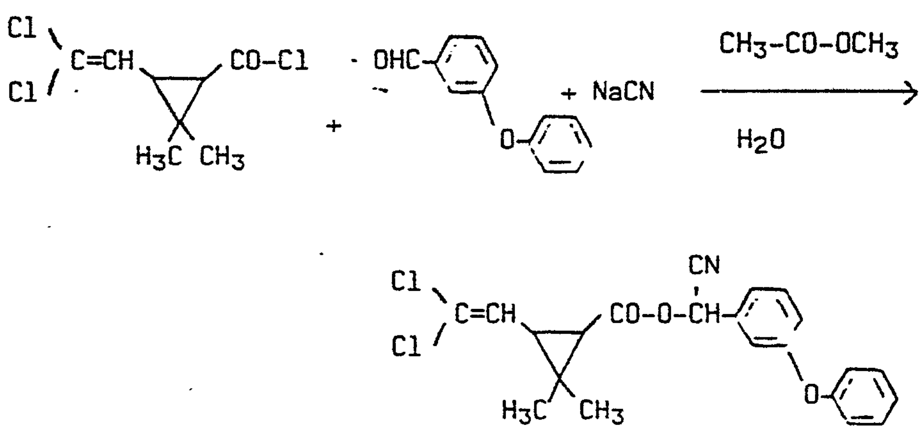


Die als Ausgangsstoffe zu verwendenden 3-Alkenyl-2,2-dimethyl-cyclopropancarbonsäurechloride sind durch Formel (II) definiert. In dieser Formel stehen vorzugsweise

$R^3$ für Wasserstoff, Fluor, Chlor, Brom, Methyl oder Trifluormethyl und

$R^4$ für Fluor, Chlor, Brom, $C_1$-$C_5$-Alkyl, $C_1$-$C_2$-Fluoralkyl, $C_1$-$C_2$-Chlorfluoralkyl oder für Phenyl, welches gegebenenfalls durch Fluor, Chlor, Brom und/oder durch gegebenenfalls durch Fluor oder Chlor substituierte Reste aus der Reihe $C_1$-$C_4$-Alkyl, $C_1$-$C_4$-Alkoxy, $C_1$-$C_4$-Alkylthio oder $C_1$-$C_2$-Alkylendioxy substituiert ist, oder die beiden Reste $R^3$ und $R^4$ stehen zusammen für $C_2$-$C_5$-Alkandiyl (Alkylen).

Die weiter als Ausgangsstoffe zu verwendenden 3-Phenoxy-benzaldehyde sind durch Formel (III) definiert. In dieser Formel stehen vorzugsweise

$R^1$ für Wasserstoff oder Fluor und

$R^2$ für Wasserstoff, Fluor, Chlor oder Brom.

Besonders bevorzugt sind Ausgangsverbindungen der Formel (II), in welcher

$R^3$ für Fluor, Chlor oder Brom steht und

$R^4$ für Fluor, Chlor, Brom, $C_1$-$C_2$-Fluoralkyl, Phenyl, 4-Fluorphenyl oder 4-Chlor-phenyl steht.

Weiter ist besonders bevorzugt die Ausgangsverbindung der Formel (III), in welcher

$R^1$ für 4-Fluor und

$R^2$ für Wasserstoff steht.

Als Beispiele für die Ausgangsstoffe der Formel (II) seien genannt: 3-(2,2-Dichlor-vinyl)-, 3-(2,2-Difluor-vinyl)-, 3-(2,2-Dibrom-vinyl)-,

3-(2-Chlor-3,3,3-trifluor-1-propenyl)-, 3-(2-Chlor-2-phenyl-vinyl)-, 3-(2-Chlor-2-(4-fluor-phenyl)-vinyl)- und 3-(2-Chlor-2-(4-chlor-phenyl)-vinyl-2,2-dimethyl-cyclopropancarbonsäurechlorid.

Als Beispiel für die Ausgangsstoffe der Formel (III) sei 4-Fluor-3-phenoxy-benzaldehyd genannt.

Die Ausgangsverbindungen der Formeln (II) und (III) sind bereits bekannt (vergleiche DE-OS 2 7o9 264, GB-PS 1 413 491 und 2 ooo 764).

Alkalimetallcyanide, welche beim erfindungsgemäßen Verfahren verwendet werden können, sind beispielsweise Natriumcyanid und Kaliumcyanid.

Alkylester niederer Carbonsäuren, welche beim erfindungsgemäßen Verfahren als Verdünnungsmittel dienen, sind vorzugsweise Methylester, Ethylester, n- und iso-Propylester sowie n-, iso- und sec-Butylester von Ameisensäure, Essigsäure und Propionsäure. Als Beispiele seien genannt:
Ameisensäuremethylester (Methylformiat), Ameisensäureethylester (Ethylformiat), Essigsäuremethylester (Methylacetat), Essigsäureethlester (Ethylacetat), Propionsäureethylester (Ethylpropionat) und Essigsäure-n-butylester (Butylacetat).

Alkalibisulfite (-hydrogensulfite oder -pyrosulfite), welche beim erfindungsgemäßen Verfahren eingesetzt werden können sind beispielsweise Natrium-bisulfit und Kalium-bisulfit. Vorzugsweise wird Natriumbisulfit als Zusatzstoff eingesetzt. In einer bevorzugten Verfahrensvariante werden Alkalibisulfite in katalytischen Mengen eingesetzt.

In einer weiteren bevorzugten Variante des erfindungsgemäßen Verfahrens werden als Ausgangsstoffe 1:1-Addukte aus Phenoxybenzaldehyden der Formel (III) und Alkalibisulfiten eingesetzt.

Die Reaktionstemperatur wird beim erfindungsgemäßen Verfahren im allgemeinen zwischen -5 und +25°C, vorzugsweise zwischen 0 und 15° C gehalten. Das Verfahren wird im allgemeinen bei Normaldruck durchgeführt.

Auf 1 Mol 3-Alkenyl-2,2-dimethyl-cyclopropancarbonsäurechlorid der Formel (II) werden im allgemeinen zwischen o,8 und 1,2 Mol, vorzugsweise zwischen o,9 und 1,o5 Mol 3-Phenoxy-benzaldehyd der Formel (III) und 1 bis 2 Mol, vorzugsweise 1,1 bis 1,4 Mol Cyanid eingesetzt.

Auf loo Volumenteile Alkylester niederer Carbonsäuren werden 1 bis 2oo Volumenteile, vorzugsweise 2o bis 12o oder 1 bis 3 Volumenteile Wasser eingesetzt.

In einer bevorzugten Ausführungsform des erfindungsgemäßen Verfahrens werden die Ausgangsverbindungen der Formeln (II) und (III) in dem als Verdünnungsmittel dienenden Carbonsäureester dispergiert und unter starkem Rühren wird die wässrige Cyanidlösung langsam zudosiert. Das Reaktionsgemisch wird bis zum Ende der Umsetzung gerührt und dann gegebenenfalls mit Wasser und Carbonsäureester verdünnt. Die organische Phase wird abgetrennt, mit Wasser gewaschen, getrocknet und im Vakuum vom Lösungsmittel befreit,

wobei das Produkt der Formel (I) als öliger Rückstand verbleibt.

In einer weiteren bevorzugten Ausführungsform des erfindungsgemäßen Verfahrens werden die Ausgangsverbindungen der Formel (III) und das Alkalimetallcyanid in dem als Verdünnungsmittel dienenden Carbonsäureester, welcher dann vorzugsweise 1 bis 3 Teile Wasser enthält, dispergiert und die Ausgangsverbindung der Formel (II) wird tropfenweise dazu gegeben. Das Reaktionsgemisch wird bis zum Ende der Umsetzung gerührt; das als Koppelprodukt gebildete Alkalimetallchlorid wird durch Filtration (Absaugen) abgetrennt und vom Filtrat wird das Lösungsmittel unter vermindertem Druck abdestilliert. Das im Rückstand verbleibende Produkt der Formel (I) kann nach üblichen Methoden weiter gereinigt werden.

Die Produkte der Formel (I) weisen 3 asymmetrische Kohlenstoffatome auf und enthalten demnach 8 optische Isomere. An den 3 asymmetrischen Kohlenstoffatomen - den Cyclopropan-Kohlenstoffatomen $^1$ und $^3$ sowie dem Benzyl-Kohlenstoffatom $\alpha$ ist jeweils R- und S-Konfiguration möglich. Durch quantitative Hochdruckflüssigkeitschromatographie (high-pressure-liquid-chromatography HPLC) der Produkte der Formel (I) können 4- Diastereomerenpaare bestimmt werden, welche wie folgt abgekürzt beschrieben werden, wobei zwecks besserer Transparenz zur Festlegung der Konfiguration am Cyclopropangerüst nicht die Abkürzungen 1 R/3 R, 1 R/3 S, 1 S/3 S und 1 S/3 R, sondern die Bezeichnungen cis-1 R, cis-1 S, trans-1 R und trans-1 S verwendet werden:

I cis - 1 R, $\alpha$ R
cis - 1 S, $\alpha$ S
II cis - 1 R, $\alpha$ S
cis - 1 S, $\alpha$ R
III trans-1 R, $\alpha$ R
trans-1 S, $\alpha$ S
IV trans-1 R, $\alpha$ S
trans-1 S, $\alpha$ R

Durch das erfindungsgemäße Verfahren werden Produkte erhalten, in denen der Anteil der Diastereomerenpaare II und IV, welche höhere insektizide Wirksamkeit als die Diastereomerenpaare I und III zeigen, wesentlich höher ist als bei den bekannten Herstellungsverfahren.

Das erfindungsgemäße Verfahren soll anhand der folgenden Beispiele erläutert werden:

Beispiel 1

Herstellung von 3-(2,2-Dichlor-vinyl)-2,2-dimethyl-cyclopropancarbonsäure-(4-fluor-3-phenoxy-benzyl)-ester (1) in Essigsäure-ethylester /Wasser (Zweiphasenmedium)

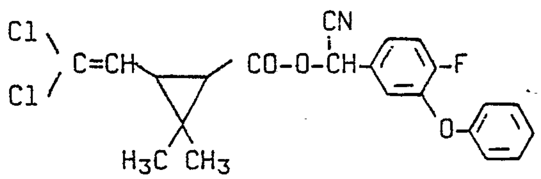
(1)

239,5 g (1 Mol) 3-(2,2-Dichlor-vinyl)-2,2-dimethyl-cyclopropan-carbonsäurechlorid und 218,2 g 4-Fluor-3-phenoxy-benzaldehyd (1 Mol) werden in 1 l Essigsäureethylester unter Argon-Atmospäre vorgelegt. Unter sehr heftigem Rühren (ca. 15oo Umdrehungen pro Minute) und unter Außenkühlung mit Eiswasser (Innentemperatur 0 bis 1o°C) wird im Laufe von 3o Minuten eine Lösung von 58,8g (1,2 Mol) Natriumcyanid in 2oo ml Wasser zugetropft und das Reaktionsgemisch wird noch 3 Stunden bei 5 bis 1o°C gerührt. Dann wird mit 1oo ml Wasser verdünnt, die organische Phase abgetrennt, zweimal mit je 3oo ml Wasser gewaschen, mit 4o g Natriumsulfat getrocknet und durch Vakuumdestillation vom Lösungsmittel befreit. Man erhält 43o,2 g (1) als bräunlich viskoses Oel. Die Ausbeute beträgt nach HPLC-Analyse 91,5% der Theorie (1oo%ig).

Isomerenverhältnis (I + III) : (II + IV) = 56 : 44

Bei einem Analogversuch unter Verwendung von Toluol als Verdünnungsmittel ergab sich folgendes Isomerenverhältnis:
(I+ III) : (II + IV) = 65,5 : 34,5.

Beispiel 2

Einfluß des Lösungsmittels auf die Reaktionsgeschwindigkeit bei der Herstellung von (1).

Es wurde eine Reihe von Versuchen analog Beispiel 1 durchgeführt, wobei nur das Lösungsmittel variiert wurde. Als 'Reaktionszeit' wird die Zeit angegeben, die abläuft, bis keine Ausgangsstoffe der Formeln (II) und (III) durch Dünnschichtchromatographie mehr nachweisbar sind.

| Lösungsmittel (1 l/Mol) | Reaktionszeit (Stunden) |
|---|---|
| Toluol | 16 |
| Xylol | 12 |
| Cyclohexan | 9 |
| Butylacetat | 4 |
| Ethylacetat | 2-3 |
| Methylacetat | 2-3 |
| Ethylformiat | 2-3 |

Reaktionstemperatur: 0 bis 5°C (Stand der Technik 2o bis 25°C).

Beispiel 3

Einfluß von Natriumbisulfit auf die Isomerenverteilung bei der Herstellung von (1).

Es wurde eine Versuchsreihe mit verschiedenen Zusatzmengen Bisulfitlösung durchgeführt. In 5oo ml Rührkolben wurden jeweils vorgelegt:

21,6 g 3-Phenoxy-4-fluor-benzaldehyd (o,1 Mol),

2o ml Essigester

und eine variierte Menge 4o%ige Natriumbisulfitlösung:

Versuch 1: 26,o g (o,1 Mol $NaHSO_3$)

Versuch 2: 13,o g (o,o5 Mol $NaHSO_3$)

Versuch 3: 6,5 g (o,o25 Mol $NaHSO_3$)

Versuch 4: 0

Zu der Mischung tropft man unter Rühren bei 2o°C Innentemperatur gleichzeitig:

1) 24,2 g (o,1 Mol) 3-(2,2-Dichlor-vinyl)-2,2-dimethyl-cyclopropancarbonsäurechlorid und

2) wässrige Natriumcyanidlösung, und zwar im

Versuch 1: 11,o g NaCN + 22 g $H_2O$ (o,22 Mol NaCN)

Versuch 2: 8,8 g NaCN + 17,6 g $H_2O$ (o,18 Mol NaCN)

Versuch 3: 7,6 g NaCN + 15,2 g $H_2O$ (o,155 Mol NaCN)

Versuch 4: 5,9 g NaCN + 13 g $H_2O$ (o,12 Mol NaCN)

Die Zutropfdauer betrug ca. 3o Minuten. Man ließ dann noch einige Zeit heftig rühren, bis der Aldehydfleck im Dünnschichtchromatogramm (Kieselgel, Toluol) verschwunden war. Dies dauerte im

Versuch 1 ca. 3o Minuten
Versuch 2 ca. 3o Minuten
Versuch 3 ca. 1 Stunde
Versuch 4 ca. 2 Stunden

Die effektiven Rührzeiten waren jeweils ca. 1 Stunde länger (Zeit zur Erstellung und Auswertung des Chromatogramms).

Zur Aufarbeitung gab man jeweils 8o ml Essigester und 5o ml Wasser hinzu, trennte die Phasen, wusch die organische Phase zweimal mit je 4o ml Wasser nach, trocknete mit etwas Natriumsulfat und entfernte das Lösungsmittel im Vakuum. Durch HPLC-Analyse wurden folgende Werte für das Isomeren-verhältnis (I + III): (II + IV) erhalten:

Versuch 1: 52,3 : 47,7
Versuch 2: 55,1 : 44,9
Versuch 3: 57,6 : 42,4
Versuch 4: 59,9 : 4o,1

<u>Beispiel 4</u>

Herstellung von (1) im einphasigen Medium:

Verwendung von Essigsäureethylester mit 2% Wassergehalt

125 g (o,525 Mol) 3-(2,2-Dichlor-vinyl)-2,2-dimethyl-cyclopropan-carbonsäurechlorid (95,7%ig) werden zu einer auf 0 bis 5°C gekühlten Mischung aus lo9 g (o,5 Mol) 4-Fluor-3-phenoxy-benzaldehyd, 44,2 g (o,625 Mol) Kaliumcyanid (92,1%ig) und 3oo g Essigsäureethylester (Wassergehalt 2%) unter Rühren tropfenweise gegeben. Das Reaktionsgemisch wird bei 0 bis 5°C gerührt (ca. 15o Minuten) bis durch Dünnschichtchromatographie (Kieselgel/Toluol) kein Aldehyd mehr nachgewiesen werden kann. Zur Aufarbeitung wird abgesaugt, mit 8o g Essigsäureethylester nachgewaschen und vom Filtrat das Lösungsmittel unter vermindertem Druck abdestilliert. Zur Reinigung wird das im Rückstand verbliebene Produkt in 4oo ml Toluol aufgenommen, mit loo ml Wasser gewaschen und durch Destillation unter vermindertem Druck wieder vom Lösungsmittel befreit (bei Trockne noch 1 Stunde bei 8o°C/2 mbar gehalten). Man erhält 217 g (93% der Theorie) (1) als bräunlich-gelbes, klares und zähes Oel mit einem Gehalt von 93,2%.

Anteile der Diastereomerenpaare I bis IV:

I : 25,5%

II: 17,9%

III: 29,8%

IV: 2o,o%

(Wo nicht anders angegeben, beziehen sich die %-Angaben auf Gewichtsprozente)

0076411

Patentansprüche

1. Verfahren zur Herstellung von 3-Alkenyl-2,2-dimethyl-cyclopropancarbonsäure-($\alpha$-cyano-3-phenoxy-benzyl)-estern der Formel I

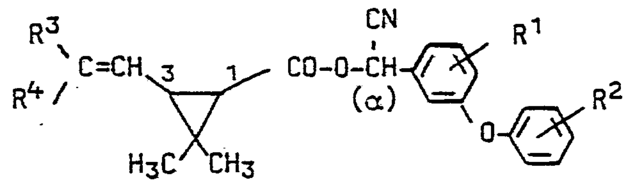

(I)

in welcher

$R^1$ und $R^2$ unabhängig voneinander für Wasserstoff oder Halogen stehen,

$R^3$ für Wasserstoff, Halogen oder gegebenenfalls substituiertes Alkyl steht und

$R^4$ für Halogen, gegebenenfalls substituiertes Alkyl oder Alkenyl oder für gegebenenfalls substituiertes Phenyl steht oder zusammen mit $R^3$ für Alkandiyl (Alkylen) steht,

dadurch gekennzeichnet, daß man 3-Alkenyl-2,2-dimethyl-cyclopropancarbonsäurechloride der Formel II

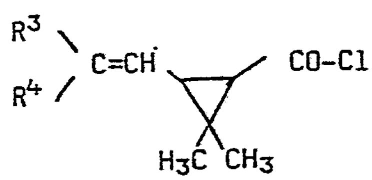

(II)

in welcher

$R^3$ und $R^4$ die oben angegebene Bedeutung haben,

mit 3-Phenoxy-benzaldehyden der Formel III

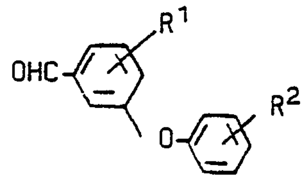

(III)

in welcher

$R^1$ und $R^2$ die oben angegebene Bedeutung haben,

- oder deren Addukten mit Alkalibisulfiten (-hydrogensulfiten oder -pyrosulfiten)-

und Alkalimetallcyaniden unter Verwendung von Alkylestern niederer Carbonsäuren und Wasser als Verdünnungsmittel gegebenenfalls unter Zusatz von Alkalibisulfiten bei Temperaturen zwischen -5 und +25°C umsetzt.

2. Verfahren gemäß Anspruch 1, bei welchem

$R^3$ für Wasserstoff, Fluor, Chlor, Brom, Methyl oder Trifluormethyl steht,

$R^4$ für Fluor, Chlor, Brom, $C_1$-$C_5$-Alkyl, $C_1$-$C_2$-Fluoralkyl, $C_1$-$C_2$-Chlorfluoralkyl oder für Phenyl steht, welches gegebenenfalls durch Fluor, Chlor, Brom und/oder durch gegebenenfalls durch Fluor oder Chlor substituierte Reste aus der Reihe $C_1$-$C_4$-Alkyl, $C_1$-$C_4$-Alkoxy, $C_1$-$C_4$-Alkylthio oder $C_1$-$C_2$-Alkylendioxy substituiert ist, oder die beiden Reste $R^3$ und $R^4$ zusammen für $C_2$-$C_5$-Alkandiyl (Alkylen) stehen,

$R^1$ für Wasserstoff oder Fluor steht und

$R^2$ für Wasserstoff, Fluor, Chlor oder Brom steht.

3. Verfahren gemäß Anspruch 1, bei welchem

$R^3$ für Fluor, Chlor oder Brom steht,

$R^4$ für Fluor, Chlor, Brom, $C_1$-$C_2$-Fluoralkyl, Phenyl, 4-Fluorphenyl oder 4-Chlor-phenyl steht,

$R^1$ für 4-Fluor steht und

$R^2$ für Wasserstoff steht.

4. Verfahren gemäß den Ansprüchen 1 bis 3, welches bei Temperaturen zwischen 0 und 15°C durchgeführt wird.

5. Verfahren gemäß den Ansprüchen 1 bis 4, wobei auf 1 Mol 3-Alkenyl-2,2-dimethyl-cyclopropancarbonsäurechlorid der Formel II zwischen 0,8 und 1,2 Mol 3-Phenoxy-benzaldehyd der Formel III und 1,1 bis 1,4 Mol Alkalicyanide eingesetzt werden.

6. Verfahren gemäß den Ansprüchen 1 bis 5, wobei auf 100 Volumenteile Alkylester niederer Carbonsäuren 1 bis 200 Volumenteile Wasser eingesetzt werden.

7. Verfahren gemäß den Ansprüchen 1 bis 6, wobei die 3-Phenoxy-benzaldehyde der Formel III als Addukte mit Alkalibisulfiten (-hydrogensulfiten oder -pyrosulfiten) eingesetzt werden.

8. Verfahren gemäß den Ansprüchen 1 bis 6, wobei die Alkalibisulfite (-hydrogensulfite oder -pyrosulfite) bzw. Addukte mit den 3-Phenoxy-benzaldehyden der Formel III in katalytischen Mengen eingesetzt werden.

9. Verfahren gemäß den Ansprüchen 1 bis 8, wobei auf 100 Volumenteile Alkylester niederer Carbonsäuren 1 bis 3 Volumenteile Wasser eingesetzt werden.

10. Verfahren gemäß den Ansprüchen 1 bis 9, wobei als Alkalicyanide Natrium- oder Kaliumcyanid eingesetzt werden.

Europäisches Patentamt

# EUROPÄISCHER RECHERCHENBERICHT

Nummer der Anmeldung 0076411

EP 82 10 8617.0

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D,Y | DE - A1 - 2 709 264 (BAYER)<br>* Seite 12: Reaktionsschema (b) *<br>-- | 1-10 | C 07 C 121/75<br>C 07 C 120/00<br>//A 01 N 53/00 |
| Y | EP - A2 - 0 033 160 (BAYER)<br>* Seite 13, Zeilen 5 bis 6; Seite 3, Zeilen 6 bis 17 *<br>-- | 1-10 | |
| Y | Patent Abstracts of Japan<br>Band 3, Nr. 83, 18. Juli 1979<br>Seite 67C52<br>& JP - A - 54 - 59259<br>-- | 1-10 | RECHERCHIERTE SACHGEBIETE (Int. Cl.³)<br>A 01 N 53/00<br>C 07 C 121/75 |
| A | EP - A1 - 0 025 925 (BAYER)<br>* Ansprüche; Beispiel 1 *<br>-- | 1-10 | |
| A | EP - A1 - 0 009 792 (BAYER)<br>* Seite 4, Zeilen 7 bis 18 *<br>-- | 1-10 | |
| A | US - A - 4 280 965 (I.C.I. AMERICAS)<br>* Beispiele *<br>---- | 1-10 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-12-1982 | BREW |

EPA form 1503.1 06.78